# EUROPÄISCHE PATENTSCHRIFT

(11) **EP 1 105 202 B1**
(45) Veröffentlichungstag und Bekanntmachung des Hinweises auf die Patenterteilung: **09.04.2003**
(21) Anmeldenummer: 99961968.7
(22) Anmeldetag: 10.07.1999
(51) Int. Cl.: B01D 46/42, B01D 46/04, B01D 46/24

(54) **RINGSPALTINJEKTOR**
ANNULAR GAP INJECTOR
INJECTEUR A FENTE ANNULAIRE

(30) Priorität: 16.07.1998 DE 29812702 U; 19.12.1998 DE 29822701 U
(43) Veröffentlichungstag der Anmeldung: 13.06.2001
(73) Patentinhaber: FT International B.V., 3016 CN Rotterdam (NL)
(72) Erfinder: LÜBBERS, Matthias, D-99947 Bad Langensalza (DE)
(74) Vertreter: Stern, Wolfgang
(86) Internationale Anmeldenummer: DE9902144
(87) Internationale Veröffentlichungsnummer: WO00003786

(56) Entgegenhaltungen:
- EP-A- 0 225 613
- WO-A-95/27431
- DE-A- 3 004 453
- DE-C- 3 637 516
- DE-C- 19 701 983

## Beschreibung

Die Erfindung betrifft einen Ringspaltinjektor, insbesondere für ein- und mehrere Injektorstufen, bestehend aus einem Strömungsrohr, an dessen äußerem Umfang am oberen Rohrende ein mit einem Reinigungsgasanschluß versehender Kanal angeordnet ist, der nach innen radial in einen als Düse wirkenden Ringspalt mündet

Nach der DE 197 01 983 ist ein Ringspaltinjektor bekannt, der ohne Ventilschaltungen am Zulauf des Reinigungsgases zum Reinigen von Filterelementen gesteuert werden kann, wobei die Ringspaltinjektoren in einer Reinigungsvorrichtung in Abhängigkeit der anhaftenden Partikelmenge an den jeweils zugeordneten Filterelementen einzeln aktivierbar sind und somit ein quasi kontinuierliches Austragen der Partikel aus der Reinigungsvorichtung ohne störenden Einfluß auf die vorgeschaltete Prozeßanlage erreichen.
Hierzu ist im bzw. am Kanal jedes Ringspaltinjektors ein schaltbares Absperrelement, z. B. eine Kreisringmembrane oder ein Ventil, angeordnet, das den Reinigungsgasdurchgang zum Ringspalt absperrt und bei Erfordernis den Durchgang zum Abströmen von Reinigungsgas über den Ringspalt freigibt.
Diese Lösung stellt eine kompakte Einheit dar, bei der das Absperrelement über eine separate Leitung und ein Ventil mit einem Drucklufterzeuger verbunden ist und dabei der Mediendruck ständig mit einer hohen Druckdifferenz zur Umgebung anliegt Diese Leitung befindet sich im Wirkbereich des gefilterten Gases.

Aufgabe der Erfindung ist es, montage- und servicefreundliche sowie kostengünstige Ringspaltinjektoren zu schaffen, bei denen die Aktivierungselemente für den Reinigungsvorgang in einfacher Bauweise verschleißarm ausgebildet sind.

Erfindungsgemäß wird die Aufgabe durch die Merkmale des Patentanspruches 1 gelöst. Vorteilhafte Ausgestaltungen der Erfindung sind in den Ansprüchen 2 bis 6 beschrieben.

Vorteilhaft an der Erfindung ist, daß die Druckluftleitung für das Betätigen des Absperrventils zum Reinigen des Staubfilters nur während des Reinigungsimpulses einer Walkbelastung ausgesetzt ist Der Druckspeicher ist an geeigneter Stelle aus dem Filtergehäuse herausgeführt. Weiterhin wird der Schlauch für die Steuerluft im Zugang der Reinigungsluft zugeführt, so daß dieser nicht mehr unter Einfluß des zu reinigenden Mediums steht.
Dadurch kann das Absperrelement auch elektrisch oder hydraulisch betätigbar ausgebildet werden, wobei die Steuerleitung entweder als Kabel oder als Hydraulikleitung ausgeführt ist, die jeweils mit Schalter bzw. Ventil und der zugehörigen Steuerung versehen sind.

Die Erfindung wird nachstehend anhand eines Ausführungsbeispieles näher erläutert Die zugehörige Zeichnung zeigt:

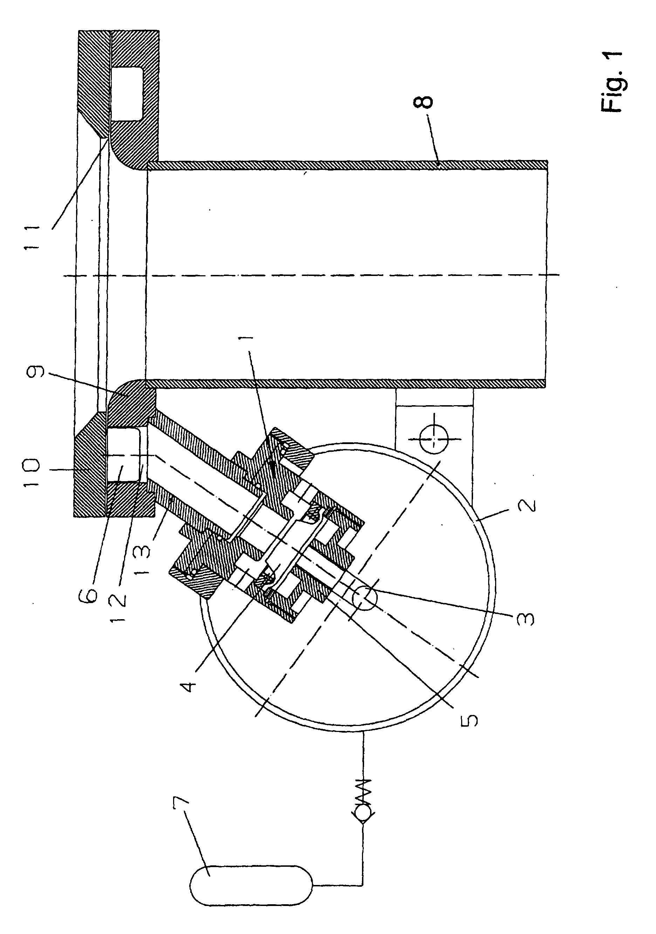

- Figur 1: eine Schnittdarstellung eines Ringspaltinjektors mit Einsatz der Steuerleitung im Bereich der Filteranlage innerhalb des Druckspeichers.

Die Ringspaltinjektoren sind in bekannter Art in eine Gasreinigungsvorrichtung mit beispielsweise zwei Injektorstufen eingebaut und dienen der Reinigung von Filterelementen, die im Gasreinigungsprozeß mit Partikeln behaftet werden. Zur Versorgung mit Reinigungsgas steht der Kanal 6 direkt oder mittelbar über ein Absperrelement 1 und einem anschließendem rohrförmigen Druckspeicher 2 mit einem Drucklufterzeuger bzw. -behälter 7 in Wirkverbindung.

Auf dem Ende des Strömungsrohres 8 ist ein Kanalinnenring 9 angeordnet, der an seinem inneren Rand radiale Krümmungen zum Inneren des Strömungsrohres 8 aufweist. Im Kanalinnenring 9 ist der ringförmige Kanal 6 angeordnet, der am Ringspalt 11 ausläuft. Auf dem Kanalinnenring 9 ist ein Oberteilring 10 angeordnet, dessen Innenrand an der radialen Krümmung des Kanalinnenringes 9 mündet, wodurch der Ringspalt 11 gebildet wird. In den Kanal 6 ist eine Öffnung 12 eingearbeitet, an der vorzugsweise über ein Rohr 13 ein Absperrelement 1 zum Absperren des Durchgangs des Reinigungsgases angeordnet ist.
Das Absperrelement 1 ist im Druckspeicher 2 angeordnet und steht über diesem mit dem Drucklufterzeuger bzw. -behälter 7 in Wirkverbindung.

Das Absperrelement 1 besteht aus einem Ventilgehäuse, in dem eine Membrane 4 angeordnet ist, die für den Durchgang des Reinigungsgases öffnet und schließt Steuerluftseitig vor der Membrane 4 ist ein Ventildeckel 5 angeordnet, der die Membrane 4 in dem Ventilgehäuse des Absperrelementes 1 einspannt. An dem Ventildeckel 5 ist eine Steuerleitung 3 für das Betätigen des Absperrventils 1 angeschlossen, die innerhalb des Druckspeichers 2 angeordnet ist Der Druckspeicher 2 ist an geeigneter Stelle aus dem Filtergehäuse herausgeführt Die Steuerieitung 3 ist außerhalb des Filtergehäuses aus dem Druckspeicher 2 herausgeführt und über ein nicht dargestelltes Ventil mit Steuerung mit einem weiteren Druckspeicher verbunden.
Während der Abgasreinigung liegt an der Membrane 4 Steuerluftdruck an, so daß diese den Durchgang für das Reinigungsgases am Ventilgehäuse sperrt. Dabei ist der Steuerdruck gleich oder höher als der Druck des Reinigungsgases. Nachdem an dem zugeordneten Filterelement genügend Partikel anhaften wird zum Reinigen des Filterelements das Reinigungsgas durch Öffnen des Absperrventils 1 aus dem Druckspeicher 2 mit einem Druck zugeschaltet Dazu wird die Steuerdruckluft durch die nicht dargestellte Steuerung und Ventil kurzzeitig entlüftet und die Membrane 4 öffnet während dieses Zeitraumes den Durchgang für das Reinigungsgas, d.h. nach dem Reinigen des Filterelementes wird im Druckraum der Membrane 4 die Steuerdruckluft wieder zugeschaltet, wodurch sich die Membrane 4 in Richtung "Absperren" bewegt. Damit ist der Reinigungsgasdurchgang geschlossen und es strömt kein Reinigungsgas über den Ringspalt 11 aus.

Es liegt auch im Rahmen der Erfindung, beliebige Absperrelemente mit ihren bekannten Steuerungseinheiten einzusetzen. Dabei können die Absperrelemente pneumatisch, hydraulisch oder elektrisch betätigbar ausgebildet sein.

## Patentansprüche

1. Ringspaltinjektor, insbesondere für ein- und mehrere Injektorstufen, bestehend aus einem Strömungsrohr (8), an dessen äußerem Umfang am oberen Rohrende ein mit einem Reinigungsgasanschluß versehender Kanal (6) angeordnet ist, der nach innen radial in einen als Düse wirkenden Ringspalt (11) mündet und zum Öffnen und Schließen des Reinigungsgasdurchganges ein schaltbares Absperrelement (1) angeordnet ist,
**dadurch gekennzeichnet,**
**daß** das Absperrelement (1) in oder an einem Druckspeicher (2) zum Zuführen des Reinigungsgases angeordnet und
die Steuerleitung (3) für das Betätigen des Absperrventils (1) im Bereich der Filteranlage innerhalb des Druckspeichers (2) angeordnet ist, wobei der Druckspeicher (2) an geeigneter Stelle aus dem Filtergehäuse herausgeführt und die Steuerleitung (3) außerhalb des Filtergehäuses aus dem Druckspeicher (2) herausgeführt und über ein Ventil mit Steuerung mit einem Druckspeicher verbunden ist.

2. Ringspaltinjektor nach Anspruch 1,
**gekennzeichnet dadurch,**
**daß** das Absperrelement (1) mit einer schaltbaren, den Reinigungsgasdurchgang abdichtenden Membrane (4) versehen ist, die zum Absperren des Reinigungsgases auf der dem Reinigungsgasdurchganges abgewandten Seite mit Druckluft beaufschlagbar ist.

3. Ringspaltinjektor nach den Ansprüchen 1 und 2,
**gekennzeichnet dadurch,**
**daß** die Steuerleitung (3) an einem Ventildeckel (5) des Absperrelementes (1) angeschlossen ist, der steuerluftseitig vor der Membrane (4) angeordnet ist und diese in dem Gehäuse des Absperrelementes (1) einspannt.

4. Ringspaltinjektor nach Anspruch 1,
**gekennzeichnet dadurch,**
**daß** als Absperrelement (1) ein beliebiges Absperrventil einsetzbar ist, das pneumatisch, hydraulisch oder elektrisch betätigbar ausgebildet sein kann.

5. Ringspaltinjektor nach einem oder mehreren der vorstehenden Ansprüche,
**gekennzeichnet dadurch,**
**daß** das Absperrelement (1) direkt mit einem Druckerzeuger in Wirkverbindung steht.

6. Ringspaltinjektor nach einem oder mehreren der vorstehenden Ansprüche,
**gekennzeichnet dadurch,**
**daß** im oder am Druckspeicher (2) ein oder mehrere Absperrelemente (1) angeordnet sein können.

## Claims

1. Annular gap injector, in particular for single and multiple injector stages, the said annular gap injector consisting of a flow tube (8) on whose outer periphery there is disposed, at the upper end of the tube, a duct (6) which is to be provided with a cleaning gas connection and which opens radially inwards into an annular gap (11) acting as a nozzle, and a switchable shut-off element (1) is provided for the purpose of opening and closing the cleaning gas passage,
**characterised in that**
the shut-off element (1) is disposed in or on a pressure reservoir (2) for feeding in the cleaning gas, and the control line (3) for actuating the shut-off valve (1) is disposed in the region of the filtering installation inside the pressure reservoir (2), the said pressure reservoir (2) being routed out of the filter housing at a suitable point and the control line (3) being routed out of the pressure reservoir (2) outside the filter housing and being connected to a pressure reservoir via a valve with a control system.

2. Annular gap injector according to claim 1,
**characterised in that**
the shut-off element (1) is provided with a switchable diaphragm (4) which seals off the cleaning gas passage and can be acted upon with compressed air on the side that faces away from the said cleaning gas passage for the purpose of shutting off the cleaning gas.

3. Annular gap injector according to claims 1 and 2,
**characterised in that**
the control line (3) is connected to a valve cover (5) on the shut-off element (1), which valve cover is disposed, on the control air side, upstream of the diaphragm (4) and clamps the latter in the housing of the said shut-off element (1).

4. Annular gap injector according to claim 1,
**characterised in that**
use may be made, as the shut-off element (1), of any desired shut-off valve, which may be of pneumatically, hydraulically or electrically actuatable construction.

5. Annular gap injector according to one or more of the preceding claims,
**characterised in that**
the shut-off element (1) is in direct operative connection with a pressure-generator.

6. Annular gap injector according to one or more of the preceding claims,
**characterised in that**
one or more shut-off elements (1) may be disposed in or on the pressure reservoir (2).

## Revendications

1. Injecteur à espace annulaire, plus particulièrement pour un ou plusieurs niveaux d'injection, composé d'un conduit d'écoulement (8), au niveau de la surface extérieure duquel un canal (6) muni d'une alimentation à gaz de nettoyage est disposé au niveau des embouts supérieurs, qui se jette vers l'intérieur de façon radiale dans un espace annulaire (11) agissant comme une buse et un élément d'arrêt (1) commutable est disposé pour l'ouverture et la fermeture du passage du gaz de nettoyage,
**caractérisé en ce que**
l'élément d'arrêt (1) est disposé dans ou au niveau d'un accumulateur de pression (2) pour introduire le gaz de nettoyage, et **en ce que** la conduite de pilotage (3) est disposée pour actionner la soupape d'arrêt (1) dans la région de l'installation de filtrage à l'intérieur de l'accumulateur de pression (2), moyennant quoi l'accumulateur de pression (2) est sorti du logement de filtre au niveau de la position appropriée, la conduite de pilotage (3) est sortie de l'accumulateur de pression (2) à l'extérieur du logement de filtre et est reliée par une soupape par une commande à un accumulateur de pression.

2. Injecteur à espace annulaire selon la revendication 1,
**caractérisé en ce que**
l'élément d'arrêt (1) est muni d'une membrane (4) commutable permettant de rendre étanche le passage du gaz de nettoyage, membrane qui peut être alimentée en air comprimé pour bloquer le gaz de nettoyage du côté opposé au passage du gaz de nettoyage.

3. Injecteur à espace annulaire selon les revendications 1 et 2,
**caractérisé en ce que**
la conduite de pilotage (3) est raccordée à un chapeau de soupape (5) de l'élément d'arrêt (1), qui est disposé du côté de l'air de réglage devant la membrane (4) et celle-ci est encastrée dans le logement de l'élément d'arrêt (1).

4. Injecteur à espace annulaire selon la revendication 1,
**caractérisé en ce que**
une soupape d'arrêt quelconque peut être placée comme élément d'arrêt (1), qui peut être pneumatique, hydraulique ou actionnable électriquement.

5. Injecteur à espace annulaire selon l'une quelconque des revendications précédentes,
**caractérisé en ce que**
l'élément d'arrêt (1) est en contact direct avec un générateur de pression.

6. Injecteur à espace annulaire selon l'une quelconque des revendications précédentes,
**caractérisé en ce que**
un ou plusieurs éléments d'arrêt (1) peuvent être disposés dans ou au niveau de l'accumulateur de pression (2).
